# EUROPEAN PATENT APPLICATION

(11) **EP 4 768 354 A1**
(43) Date of publication of application: **01.07.2026**
(21) Application number: 25212935.8
(22) Date of filing: 03.11.2025
(51) Int. Cl.: B60W 30/14, B60W 60/00, B65G 15/00

(54) **SYSTEM, METHOD, AND COMPUTER PROGRAM FOR CONTROLLING VEHICLE**

(30) Priority: 27.12.2024 JP 2024231910
(71) Applicant: TOYOTA JIDOSHA KABUSHIKI KAISHA, Toyota-shi, Aichi-ken 471-8571 (JP)
(72) Inventor: KANOU, Takeshi, Toyota-shi, 471-8571 (JP); HOZUMI, Shinya, Toyota-shi, 471-8571 (JP); SAITO, Yasuhiro, Kariya-shi, 448-8666 (JP)
(74) Representative: TBK

(57) **Abstract**

A system that controls a vehicle runnable by unmanned driving includes an acquisition unit and a control unit. The acquisition unit acquires position information on a position of a wheel of the vehicle. The control unit limits acceleration of the vehicle to acceleration within a predetermined range when the position of the wheel is in a predetermined region.

## Description

### CROSS-REFERENCE TO RELATED APPLICATIONS

This application claims priority to Japanese Patent Application No. 2024-231910 filed on December 27, 2024, which is incorporated herein by reference in its entirety.

### BACKGROUND

### FIELD

The present disclosure relates to a system, a method, and a computer program for controlling a vehicle.

### RELATED ART

Japanese Translation of PCT International Application Publication No. JP-T-2017-538619 discloses a technology to cause a vehicle to run autonomously or by remote control in a production step of the vehicle.

At the location where the vehicle is traveling, there are areas where sudden acceleration or braking is undesirable. For example, when sudden acceleration or sudden braking is executed during running on inspection equipment, the inspection equipment may get damaged. Such a problem may occur in not only the region on the inspection equipment but also any region.

### SUMMARY

The present disclosure is achievable as the following aspects.

According to one aspect of the present disclosure, a system that controls a vehicle runnable by unmanned driving is provided. The system includes an acquisition unit and a control unit. The acquisition unit acquires position information on a position of a wheel of the vehicle. The control unit limits acceleration of the vehicle to acceleration within a predetermined range when the position of the wheel is in a predetermined region.

The present disclosure can be implemented in aspects other than the aspect as the system described above. Examples of the aspects include a control device, a vehicle, a method for controlling a vehicle, a program to implement a method for controlling a vehicle, and a program product including a program. The computer program product may be, for example, a non-transitory storage medium recording a program, or intangible software distributable over a network.

### BRIEF DESCRIPTION OF THE DRAWINGS

Fig. 1 is a conceptual diagram illustrating a configuration of a system according to a first embodiment;
Fig. 2 is a block diagram illustrating a configuration of the system;
Fig. 3 is a flowchart illustrating a procedure of running control of a vehicle according to the first embodiment;
Fig. 4 is a flowchart illustrating a procedure of acceleration control of the vehicle;
Fig. 5 is an explanatory diagram illustrating a schematic configuration of a system according to a second embodiment; and
Fig. 6 is a flowchart illustrating a procedure of running control of a vehicle according to the second embodiment.

### DETAILED DESCRIPTION

### A. First Embodiment:

### <Overview of System 50>

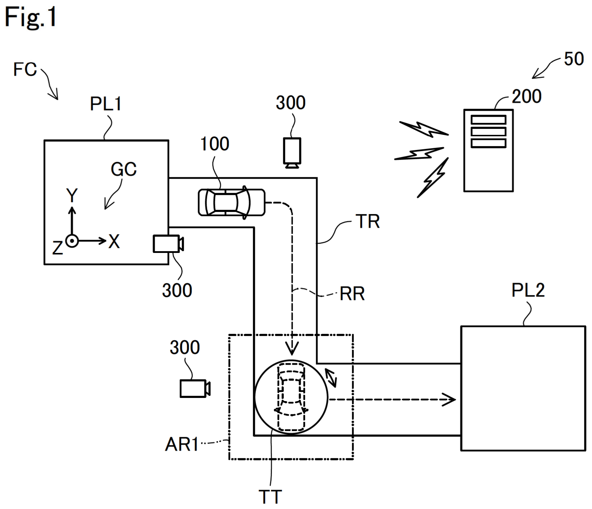

Fig. 1 is a conceptual diagram illustrating a configuration of a system 50 according to a first embodiment. The system 50 is used to control a moving object. The system 50 includes one or more vehicles 100 as a moving object(s), a server 200, and one or more sensors 300.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving.

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In this embodiment, the system 50 is used in a factory FC where the vehicle 100 is produced. The reference coordinate system of the factory FC is a global coordinate system and a location in the factory FC can be expressed by X, Y, and Z coordinates in the global coordinate system. The factory FC includes a first place PL1 and a second place PL2. The first place PL1 and the second place PL2 are connected to one another through a track TR on which the vehicle 100 is runnable. The vehicle 100 moves by unmanned driving from the first place PL1 to the second place PL2 through the track TR. At the first place PL1 and the second place PL2, assembly and a variety of inspections to produce the vehicle 100 are performed.

In this embodiment, a turn table TT is provided at a corner between the first place PL1 and the second place PL2. The turn table TT is a rotatable floor surface. The turn table TT changes a direction of the vehicle 100. The vehicle 100 according to this embodiment leaves the first place PL1, and then is turned around by the turn table TT and goes toward the second place PL2.

At the first place PL1, the second place PL2, and the track TR, a plurality of sensors 300 is disposed. Sensors 300 is located outside the vehicle 100. The sensor 300 captures the vehicle 100 from outside of the vehicle 100. Specifically, the sensor 300 is configured by a camera. The camera as the sensor 300 captures the vehicle 100 and outputs image data as a detection result. The sensor 300 includes a communication device (not illustrated) and can communicate with another device, such as the server 200, by wired or wireless communication.

### <Configuration of System 50>

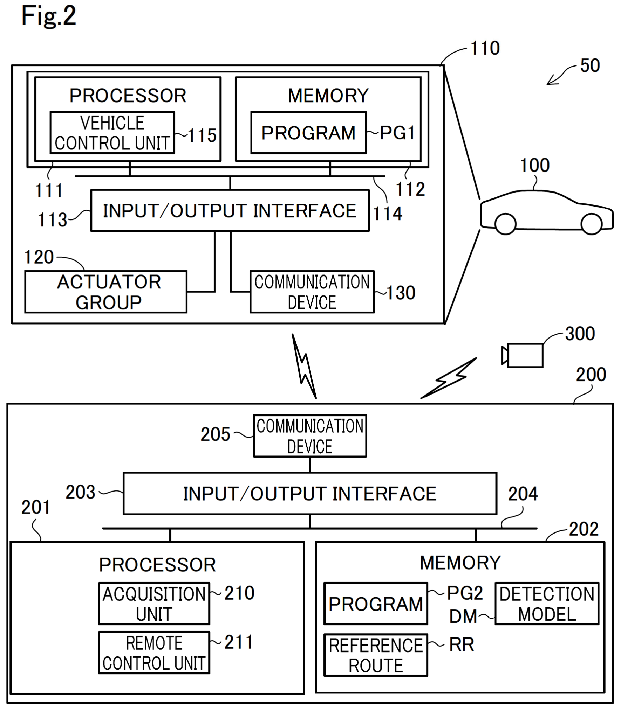

Fig. 2 is a block diagram illustrating a configuration of the system 50. The vehicle 100 includes a vehicle control device 110 to control each part of the vehicle 100, an actuator group 120 including one or more actuators that perform driving under control of the vehicle control device 110, and a communication device 130 to communicate with an external device, such as the server 200, by wireless communication. The actuator group 120 includes an actuator of a driving device for accelerating the vehicle 100, an actuator of a steering device for changing a traveling direction of the vehicle 100, and an actuator of a braking device for decelerating the vehicle 100.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120 and the communication device 130 are coupled to the input/output interface 113. The processor 111 executes a program PG1 stored in the memory 112, thus implementing various functions including a function as a vehicle control unit 115.

The vehicle control unit 115 controls the actuator group 120 to cause the vehicle 100 to run. The vehicle control unit 115 can use a running control signal received from the server 200 to control the actuator group 120, thereby causing the vehicle 100 to run. The running control signal is a control signal to cause the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The server 200 is provided outside of the vehicle 100. The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices outside of the server 200 is coupled to the input/output interface 203. The communication device 205 can communicate with the vehicle 100 by wireless communication and can communicate with each sensor 300 by wired or wireless communication. The processor 201 executes a program PG2 stored in the memory 202, thus implementing various functions including functions as an acquisition unit 210 and a remote control unit 211.

The acquisition unit 210 acquires position information on a position of a wheel of the vehicle 100 from the sensor 300. Specifically, image data output from the sensor 300 is used to acquire the position information. The wheel position information may be acquired by using a plurality of pieces of image data output from a plurality of sensors 300. Moreover, the wheel position information may be acquired by using vehicle position information described later. In this embodiment, the acquisition unit 210 acquires the position information on a position of at least one of the wheels of the vehicle 100.

The remote control unit 211 acquires a detection result of the sensor and uses the detection result to generate the running control signal to control the actuator group 120 of the vehicle 100. The remote control unit 211 then transmits the running control signal to the vehicle 100 to control unmanned driving of the vehicle 100. The remote control unit 211 may generate and output not only the running control signal but also control signals to control, for example, actuators that operate various auxiliary machines and various types of equipment including a wiper, a power window, and a light provided to the vehicle 100. That is, the remote control unit 211 may operate these various types of equipment and various auxiliary machines by remote control.

Moreover, in a case in which the position of the wheel acquired by the acquisition unit 210 is in a predetermined region, the remote control unit 211 limits acceleration of the wheel 100 to acceleration within a predetermined range. Acceleration in the present disclosure includes both positive acceleration and negative acceleration. Such acceleration limitation is implemented by limiting a running control signal relating to acceleration in the running control signal transmitted to the vehicle 100. In this embodiment, as a predetermined region AR1, a region surrounding the turn table TT illustrated in Fig. 1 is set. The predetermined region AR1 is stored in the memory 202 illustrated in Fig. 2. Moreover, the acceleration within the predetermined range is stored in the memory 202. The acceleration within the predetermined range is, for example, -0.3 G to 0.3 G. The acceleration within the predetermined range can experimentally be obtained as acceleration with which sudden acceleration and sudden braking of the vehicle 100 are not executed. Details of acceleration control of the vehicle 100 will be described later.

### <Running Control of Vehicle 100>

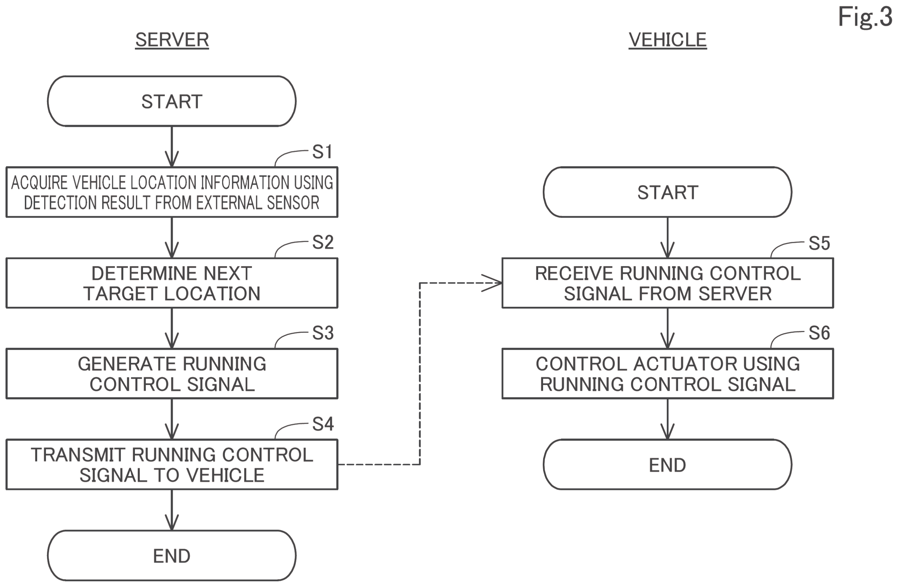

Fig. 3 is a flowchart illustrating a procedure of running control of the vehicle 100 according to the first embodiment. This procedure is executed to cause the vehicle 100 to run by unmanned driving. In the procedure in Fig. 3, the processor 201 of the server 200 executes the program PG2, thus functioning as the remote control unit 211. Moreover, the processor 111 of the vehicle 100 executes the program PG1, thus functioning as the vehicle control unit 115.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

### <Acceleration Control of Vehicle 100>

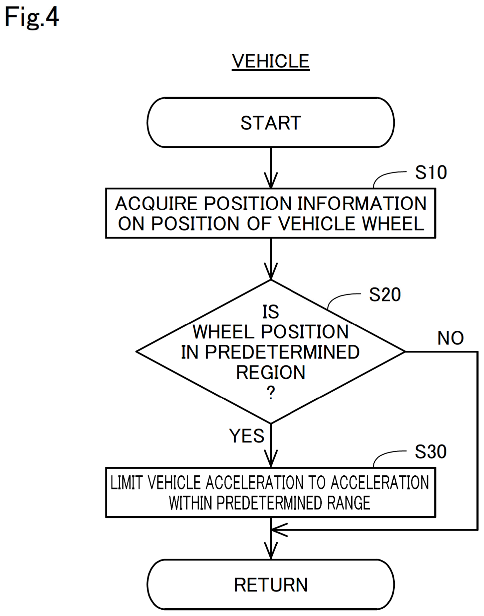

Fig. 4 is a flowchart illustrating a procedure of the acceleration control of the vehicle 100. The acceleration control is executed as one of a variety of types of control to cause the vehicle 100 to run by unmanned driving in the factory FC. Moreover, the acceleration control is executed to suppress damage to the turn table TT in the region AR1 illustrated in Fig. 1.

As illustrated in Fig. 4, at Step S10, the acquisition unit 210 acquires the position information on the position of the wheel of the vehicle 100. The position information is acquired in a method similar to the method described for Step S1 in the "running control of the vehicle 100" illustrated in Fig. 3.

As illustrated in Fig. 4, at Step S20, the remote control unit 211 can use the acquired wheel position information to determine whether the wheel is in the predetermined region AR1. In this embodiment, whether at least one of a plurality of wheels is in the predetermined region AR1 is determined. If the position of the wheel is in the predetermined region AR1 (Step S20: YES), at Step S30, the remote control unit 211 limits acceleration of the vehicle 100 to the acceleration within the predetermined range. More specifically, the remote control unit 211 limits the acceleration determined at Step S3 in the "running control of the vehicle 100" illustrated in Fig. 3 to be within the predetermined range. In this embodiment, the predetermined range is, for example, -0.3 G to 0.3 G. Such a predetermined range is an acceleration range within which sudden acceleration and sudden braking are not executed, and is a value experimentally obtained as an acceleration range where damage to the turn table TT in the region AR1 illustrated in Fig. 1 can be suppressed. As illustrated in Fig. 4, if the position of the wheel is determined to be out of the predetermined region AR1 (Step S20: NO), acceleration is not limited.

The acceleration control processing described above is repeatedly executed during running of the vehicle 100 by unmanned driving.

According to the system 50 of the first embodiment described above, the remote control unit 211 limits acceleration of the vehicle 100 to the acceleration within the predetermined range when the position of the wheel of the vehicle 100 is in the predetermined region AR1. Therefore, by setting a place where execution of sudden acceleration and sudden braking is not favorable as the predetermined region AR1, execution of sudden acceleration and sudden braking at this place can be suppressed.

Moreover, according to the system 50 of the first embodiment, the predetermined region AR1 is set as the region surrounding the turn table TT. Therefore, it can be suppressed that the vehicle 100 is controlled with comparatively large acceleration on the turn table TT. Accordingly, damage to the turn table TT due to sudden acceleration or sudden braking can be suppressed.

### B. Second Embodiment:

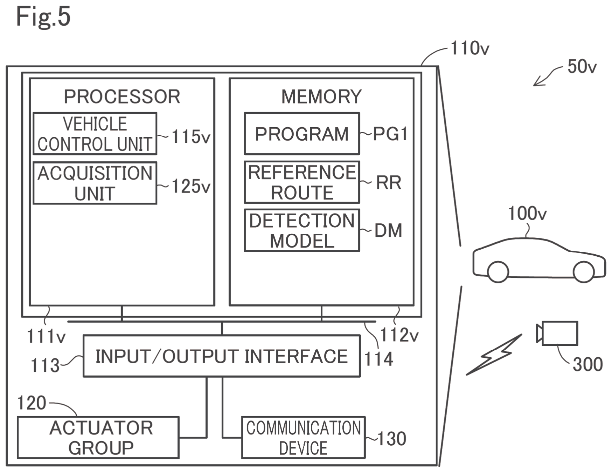

Fig. 5 is an explanatory diagram illustrating a schematic configuration of a system 50v according to a second embodiment. The system 50v of the second embodiment is different from the system 50 of the first embodiment in that the system 50v does not include the server 200. Moreover, a vehicle 100v according to this embodiment is runnable by autonomous control of the vehicle 100v. Other configurations are the same as those of the first embodiment unless otherwise described.

In this embodiment, a processor 111v of a vehicle control device 110v executes the program PG1 stored in a memory 112v, thus functioning as a vehicle control unit 115v. The vehicle control unit 115v acquires an output result of the sensor and uses the output result to generate the running control signal. The vehicle control unit 115v then outputs the generated running control signal to operate the actuator group 120, and thus can cause the vehicle 100v to run by autonomous control. In this embodiment, the memory 112v stores, in addition to the program PG1, a detection model DM and a reference route RR in advance.

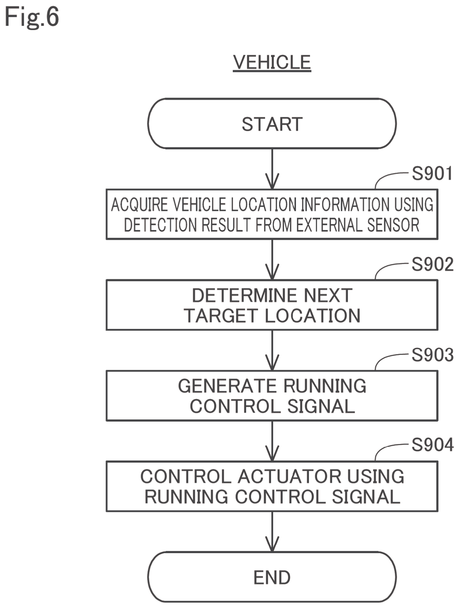

FIG. 6 is a flowchart showing a processing procedure for running control of the vehicle 100v in the second embodiment. The procedure in Fig. 6 is executed to cause the vehicle 100v to run by unmanned driving without use of the server 200.

In step S901, the processor 111v of the vehicle controller 110v acquires vehicle location information using detection result output from the camera as the external sensor 300. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator in a predetermined cycle. According to the system 50v in the present embodiment, it is possible to cause the vehicle 100v to run by autonomous control without controlling the vehicle 100v remotely using the server 200.

Moreover, as illustrated in Fig. 5, the processor 111v of this embodiment executes the program PG1 stored in the memory 112v, thus also functioning as an acquisition unit 125v. The acquisition unit 125v has a function similar to that of the acquisition unit 210 of the first embodiment. Moreover, the vehicle control unit 115v further executes the acceleration control described in the first embodiment. Therefore, in this embodiment, processing similar to the acceleration control illustrated in Fig. 4 is executed by the processor 111v of the vehicle 100v.

Also according to the system 50v of the second embodiment described above, similarly to the system 50 of the first embodiment, the running control and the acceleration control of the vehicle 100v can be executed.

### C. Another Embodiment 1:

(C1) In each embodiment described above, the memory 112, 112v, 202 may be any storage device. Examples of such a storage device include an HDD (hard disc drive), an SSD (solid state drive), and a DRAM (dynamic random access memory).

(C2) In each embodiment described above, the predetermined region AR1 is the region surrounding the turn table TT, but the present disclosure is not limited thereto. The predetermined region AR1 may be a region including the turn table TT and where at least part of the vehicle 100 may be present on the turn table. Alternatively, the predetermined region AR1 may be a region only on the turn table TT. Moreover, the predetermined region AR1 may be any region. For example, the predetermined region AR1 may be a region on inspection equipment of the vehicle 100, a region on a belt conveyor that transports the vehicle 100, a region surrounding a road surface marking, and a region on a downhill. The inspection equipment performs, for example, side-slip inspection to inspect an amount of side slip of the vehicle 100. When sudden acceleration or sudden braking is executed on the inspection equipment or the belt conveyor, the inspection equipment or the belt conveyor may be damaged. Here, execution of the acceleration control processing as described above in each embodiment can suppress damage to the inspection equipment and the belt conveyor. Moreover, on a road surface in the factory FC, various road surface markings for explaining a location, showing a running route of the vehicle 100, warning, and/or the like are provided. When sudden acceleration or sudden braking is executed on such a road surface marking, the road surface marking may be peeled off or be defaced due to a tire mark. Here, execution of the acceleration control processing as described above in each embodiment can suppress peeling off and defacement of the road surface marking. Moreover, the place where the vehicle 100 runs in the factory FC may include a downhill. When sudden acceleration is executed during downhill running, a speed of the vehicle 100 may increase more than estimated. Moreover, when sudden braking is executed during downhill running, a bottom surface of the vehicle 100 may contact a road surface. Here, execution of the acceleration control processing as described above in each embodiment can suppress an increase in speed of the vehicle 100 more than estimated and contact of the bottom surface of the vehicle 100 with the road surface. The predetermined region AR1 may comprise at least one of a subregion on the turn table, a subregion on the belt conveyor, a subregion on inspection equipment of the vehicle, a subregion on the road surface marking, and a subregion on the downhill.

(C3) In each embodiment described above, the acquisition unit 210, 125v may acquire the position information of the wheel of the vehicle 100 without use of the image data. For example, the acquisition unit 210, 125v may acquire the wheel position information by using, for example, a GNSS (global navigation satellite system) such as a GPS (global positioning system), or a so-called autonomous navigation using a gyroscope sensor and/or an acceleration sensor.

(C4) In each embodiment described above, the remote control unit 211 and the vehicle control unit 115v limit acceleration of the vehicle 100 to the acceleration within the predetermined range. However, the remote control unit 211 and the vehicle control unit 115v may limit acceleration of the vehicle 100 to a predetermined constant acceleration.

(C5) In each embodiment described above, acceleration is limited to the acceleration within the predetermined range when at least one wheel of the vehicle 100 is in the predetermined region AR1, but the present disclosure is not limited thereto. Acceleration may be limited to the acceleration within the predetermined range only when all the wheels of the vehicle 100 are in the predetermined region AR1. With such a configuration, since acceleration is limited only when all the wheels are in the predetermined region AR1, it can be suppressed that acceleration is limited when only part of the vehicle 100 is in the predetermined region AR1. That is, acceleration can be limited only when the entire vehicle 100 is highly likely to be in the predetermined region AR1.

(C6) In each embodiment described above, the acquisition unit 210, 125v may acquire the position information on the position of the wheel by using step information. The step information is information on a step at which the vehicle 100 is located. Specifically, the vehicle 100 runs by unmanned driving in the factory FC while a variety of inspections, assembly, and/or the like are executed. Such steps including inspections and assembly are executed in a predetermined order. The step order is stored in the memory 202 of the server 200 in advance. Moreover, the step and a place at which the step is performed are associated with one another and stored in the memory 202 in advance. The vehicle 100 transmits to the server 200 information indicating completion of the step, that is, completed step information as each step is completed. The processor 201 of the server 200 uses the information on the step order stored in the memory 202 and the completed step information transmitted from the vehicle 100 to execute processing to identify the step at which the vehicle 100 is located. The acquisition unit 210, 125v utilizes the identified step to acquire the position information on the position of the wheel.

(C7) In each embodiment described above, the remote control unit 211 and the vehicle control unit 115v do not necessarily limit acceleration when none of the wheels of the vehicle 100 is in the predetermined region AR1. Moreover, when none of the wheels is in the predetermined region AR1, the remote control unit 211 and the vehicle control unit 115v may ease acceleration limitation as compared with the case in which at least one wheel is in the region AR1.

### D. Another Embodiment 2:

(D1) In each of the above-described embodiments, the sensor 300 is not limited to the camera but may be the distance measuring device, for example. The distance measuring device is a light detection and ranging (LiDAR) device, for example.The detection result output by the sensor 300 may be three-dimensional point cloud data representing the vehicle 100. In this case, the server 200 and/or the vehicle 100 may acquire the vehicle position information through template matching by using the three-dimensional point cloud data as the detection result and reference point cloud data prepared in advance.

(D2) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. Specifically, the internal sensor may include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D3) In the above-described XX embodiment, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100v may acquire detection result from the internal sensor, and in generating the running control signal, may reflect the detection result from the internal sensor in the running control signal.

(D4) In the above-described XX embodiment, the vehicle 100v acquires vehicle location information using detection result from the external sensor. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the system 50v may be entirely provided at the vehicle 100v. Specifically, the processes realized by the system 50v in the present disclosure may be realized by the vehicle 100v alone.

(D5) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(D6) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle controller 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D7) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D8) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(D9) In each of the embodiments described above, some or all of the functions and processes that are implemented by software may also be implemented by hardware. Further, some or all of the functions and processes that are implemented by hardware may also be implemented by software. Examples of the hardware used to implement various functions in each of the embodiments described above include various circuits, such as integrated circuits and discrete circuits.

The present disclosure is not limited to the embodiments described above but can be implemented in a variety of configurations without departing from the spirit of the present disclosure. For example, in order to solve some or all of the problems described above or to achieve some or all of the effects described above, the technical features of the embodiments can be substituted or combined as appropriate. In addition, unless the technical feature is explained herein as being essential, it can be eliminated as appropriate. The present disclosure may be implemented in embodiments described below.
(1) According to one embodiment of the present disclosure, a system that controls a vehicle runnable by unmanned driving is provided. The system includes an acquisition unit and a control unit. The acquisition unit acquires position information on a position of a wheel of the vehicle. The control unit limits acceleration of the vehicle to acceleration within a predetermined range when the position of the wheel is in a predetermined region.
   According to this system, the control unit limits acceleration of the vehicle to the acceleration within the predetermined range when the position of the wheel of the vehicle is in the predetermined region. Therefore, it can be suppressed that the vehicle runs in the region with acceleration outside of the predetermined range. Moreover, by setting the predetermined range to an acceleration range within which sudden acceleration and sudden braking are not executed, and setting a place where execution of sudden acceleration and sudden braking is unfavorable as the predetermined region, execution of sudden acceleration and sudden braking in such a region can be suppressed.
(2) In the system of the aforementioned embodiment, the predetermined region may include at least one of a region on a turn table that changes a direction of the vehicle, a region on inspection equipment of the vehicle, a region on a belt conveyor that transports the vehicle, a region surrounding a road surface marking, and a region on a downhill.
   According to the system of this embodiment, the predetermined region includes at least one of the region on the turn table; the region on the inspection equipment of the vehicle; the region on the belt conveyor; and the region surrounding the road surface marking. Therefore, execution of sudden acceleration and sudden braking on these regions can be suppressed, and damage to the equipment or marking can be suppressed.
(3) The system of the aforementioned embodiment further includes a server and a vehicle control unit. The server includes the control unit and is provided outside of the vehicle. The vehicle control unit is installed in the vehicle and uses a running control signal received from the server to control an actuator and thus cause the vehicle to run. The actuator is used to drive the vehicle. The control unit may limit a running control signal relating to acceleration in the running control signal to limit the acceleration of the vehicle to the acceleration within the predetermined range.
The system of this embodiment includes the server including the control unit and provided outside of the vehicle, and thus can limit acceleration of the vehicle from outside of the vehicle.

## Claims

1. A system (50,50v) for controlling a vehicle (100,100v) runnable by unmanned driving, the system comprising:
an acquisition unit (125v,210) configured to acquire position information on a position of a wheel of the vehicle; and
a control unit (115,115v) configured to limit acceleration of the vehicle to acceleration within a predetermined range when the position of the wheel is in a predetermined region (AR1).

2. The system according to claim 1, wherein the predetermined region comprises at least one of a region on a turn table (TT) configured to change a direction of the vehicle; a region on inspection equipment of the vehicle; a region on a belt conveyor configured to transport the vehicle; a region surrounding a road surface marking; and a region on a downhill.

3. The system according to claim 1 or 2, further comprising:
a server (200) comprising the control unit and provided outside of the vehicle; and
a vehicle control unit (115v) installed in the vehicle and configured to use a running control signal received from the server to control an actuator and thus cause the vehicle to run, the actuator being used to drive the vehicle, wherein
the control unit limits a running control signal relating to acceleration in the running control signal to limit the acceleration of the vehicle to the acceleration within the predetermined range.

4. A method for controlling a vehicle (100,100v) runnable by unmanned driving, comprising:
acquiring position information on a position of a wheel of the vehicle; and
limiting acceleration of the vehicle to acceleration within a predetermined range (AR1) when the position of the wheel is in a predetermined region.

5. A computer program for controlling a vehicle (100,100v) runnable by unmanned driving, the computer program (PG1,PG2) being configured to cause a computer to implement:
acquiring position information on a position of a wheel of the vehicle; and
limiting acceleration of the vehicle to acceleration within a predetermined range (AR1) when the position of the wheel is in a predetermined region.
